# EUROPEAN PATENT APPLICATION

(11) **EP 4 691 855 A1**
(43) Date of publication of application: **11.02.2026**
(21) Application number: 24778923.3
(22) Date of filing: 26.02.2024
(51) Int. Cl.: B60R 11/02, G03B 15/00, G03B 17/56, H04N 23/57

(54) **VEHICLE-MOUNTED DEVICE**

(30) Priority: 27.03.2023 JP 2023049962
(71) Applicant: JVCKenwood Corporation, Yokohama-shi, Kanagawa 2210022 (JP)
(72) Inventor: SUZUKI, Yasuhiro, Yokohama-shi, Kanagawa 221-0022 (JP)
(74) Representative: Pritzlaff, Stefanie Lydia
(86) International application number: PCT/JP2024/006738
(87) International publication number: WO 2024/202780

(57) **Abstract**

An in-vehicle device (91) includes a main body part (1), a pedestal part (2), a magnet (23), and a magnetic body (17). The main body part (1) has a shape with a first direction as a longitudinal direction, and inputs or outputs an electric signal. The pedestal part (2) is mounted on a mounting member on a vehicle side. The magnet (23) is provided on one of the main body part (1) and the pedestal part (2). The magnetic body (17) is provided on the other of the main body part (1) and the pedestal part (2). The main body part (1) has an outer circumferential surface (11a) of a curved surface having at least an arc shape with a first radius (R1) in a transverse cross section orthogonal to the first direction. The pedestal part (2) has an inner circumferential surface (21a) that is recessed inward as a curved surface having the first radius (R1). The outer circumferential surface (11a) and the inner circumferential surface (21a) are magnetically attached due to a magnetic force of the magnet (23), which integrates the main body part (1) and the pedestal part (2).

## Description

### TECHNICAL FIELD

The present invention relates to an in-vehicle device.

### BACKGROUND

Patent Literature 1 describes a drive recorder, which is an in-vehicle device, including: a main body part with a camera; a support part projecting upward from the main body part; and a plate-like base formed at an upper tip of the support part. The drive recorder is mounted on a windshield of a vehicle by attaching the base on an inner surface of the windshield with double-sided tape.

In the support part of the in-vehicle device described in Patent Literature 1, an arm part and a pillar part, which are divided into a main body part side and a base side, are pivotally engaged with each other around a horizontal axis to enable up and down rotation, and can be tightened and fixed using a nut at any rotational position. This enables a user to rotate and adjust an optical axis direction of the camera in a vertical direction relative to the windshield.

### CITATION LIST

### PATENT LITERATURE

Patent Literature 1: JP 2020-199800 A

### SUMMARY

In the conventional technology described in Patent Literature 1, although the optical axis direction can be rotated vertically, the base and the main body part are substantially integrated. Therefore, after the base is mounted on the windshield, it is difficult to capture scenes other than the front of the vehicle, or occupants in the cabin, and there is room for improvement in terms of usability.

An object of the present invention is to provide an in-vehicle device having good usability.

An in-vehicle device according to the present embodiment includes: a main body part having a shape with a first direction as a longitudinal direction, and configured to input or output an electric signal; a pedestal part configured to be mounted on a mounting member on a vehicle side; a magnet provided on one of the main body part and the pedestal part; and a magnetic body provided on another of the main body part and the pedestal part, wherein the main body part has an outer circumferential surface of a curved surface having at least an arc shape with a first radius in a transverse cross section orthogonal to the first direction, the pedestal part has an inner circumferential surface that is recessed inward as a curved surface having the first radius, and the outer circumferential surface and the inner circumferential surface are magnetically attached due to a magnetic force of the magnet, which integrates the main body part and the pedestal part are integrated.

In the present embodiment, it is possible to provide an in-vehicle device having good usability.

### BRIEF DESCRIPTION OF THE DRAWINGS

[FIG. 1A] FIG. 1A is a front view illustrating an in-vehicle device 91 according to example 1 in the present embodiment.
[FIG. 1B] FIG. 1B is a top view of the in-vehicle device 91.
[FIG. 1C] FIG. 1C is a right-side view of the in-vehicle device 91.
[FIG. 2A] FIG. 2A is a front view illustrating a main body part 1 of the in-vehicle device 91.
[FIG. 2B] FIG. 2B is a horizontal cross-sectional view of the main body part 1 at a position passing through an optical axis CLc.
[FIG. 2C] FIG. 2C is a cross-sectional view taken along the line S2C-S2C of FIG. 2B.
[FIG. 3A] FIG. 3A is a front view of a pedestal part 2 of the in-vehicle device 91.
[FIG. 3B] FIG. 3B is a right-side view of the pedestal part 2 of the in-vehicle device 91.
[FIG. 3C] FIG. 3C is a cross-sectional view of the pedestal part 2 taken along the line S3Ba-S3Ba in FIG. 3B.
[FIG. 3D] FIG. 3D is a cross-sectional view of the pedestal part 2 taken along the line S3Bb-S3Bb in FIG. 3A.
[FIG. 4A] FIG. 4A is a front view of an in-vehicle device 91A according to example 2 in the present embodiment.
[FIG. 4B] FIG. 4B has a right-side view of the in-vehicle device 91A.
[FIG. 4C] FIG. 4C is an enlarged view of a Z part in FIG. 4B.
[FIG. 4D] FIG. 4D corresponds to the enlarged view of the Z part in FIG. 4B, illustrating a modified example of an outer engaging part 18 and an inner engaging part 24.
[FIG. 5A] FIG. 5A is a front view of an in-vehicle device 91B according to example 3 in the present embodiment.
[FIG. 5B] FIG. 5B is a perspective cross-sectional view of a pedestal part 2B of the in-vehicle device 91B.
[FIG. 6A] FIG. 6A is a front view of an in-vehicle device 91C according to example 4 in the present embodiment.
[FIG. 6B] FIG. 6B is a left-side view of the in-vehicle device 91C.
[FIG. 7A] FIG. 7A is a perspective exploded view of an in-vehicle device 91D according to example 5 in the present embodiment, as viewed diagonally from the front upper left.
[FIG. 7B] FIG. 7B is a perspective view of the in-vehicle device 91D as viewed diagonally from the front upper left.
[FIG. 7C] FIG. 7C is a schematic cross-sectional view illustrating a state of engagement between a pedestal part 2D and a stopper 3, and a housing 11D in the in-vehicle device 91D.
[FIG. 7D] FIG. 7D is a longitudinal cross-sectional view illustrating a state of engagement between the stopper 3 and the housing 11D in the in-vehicle device 91D.
[FIG. 8A] FIG. 8A is a perspective view illustrating a stopper 3A provided in an in-vehicle device 91E according to example 6 in the present embodiment.
[FIG. 8B] FIG. 8B is a longitudinal cross-sectional view illustrating a state of engagement with a housing 11E when the stopper 3A is in a first position.
[FIG. 8C] FIG. 8C is a longitudinal cross-sectional view illustrating a state of engagement with the housing 11E when the stopper 3A is in a second position.

### DETAILED DESCRIPTION

The present embodiment will be described with reference to in-vehicle devices 91, and 91A to 91C according to examples 1 to 4.

### (Example 1)

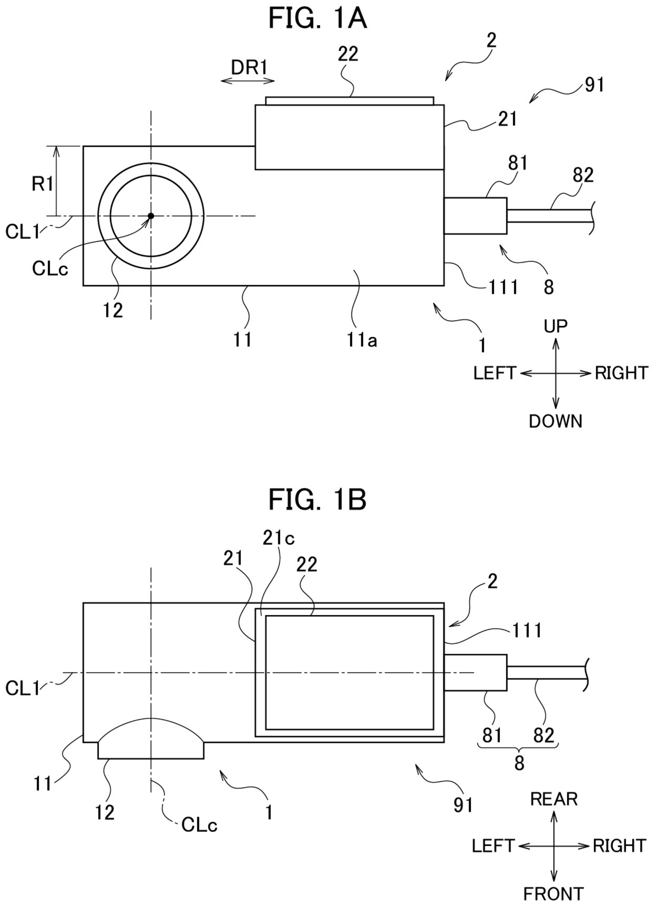

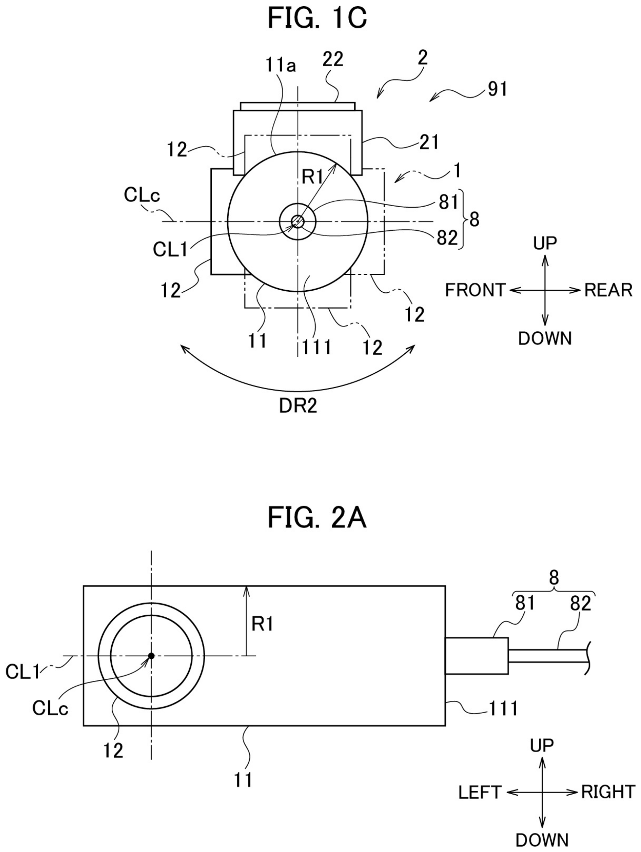

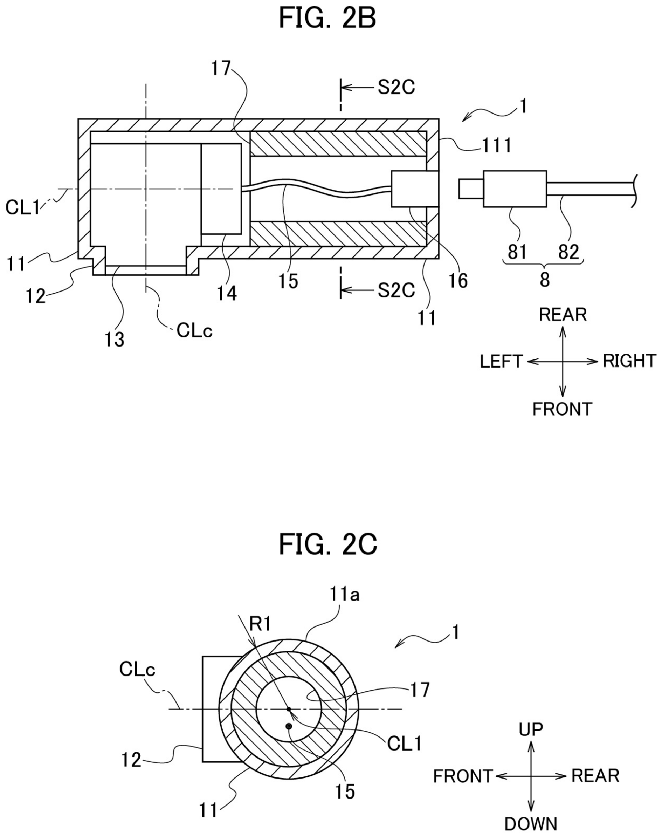

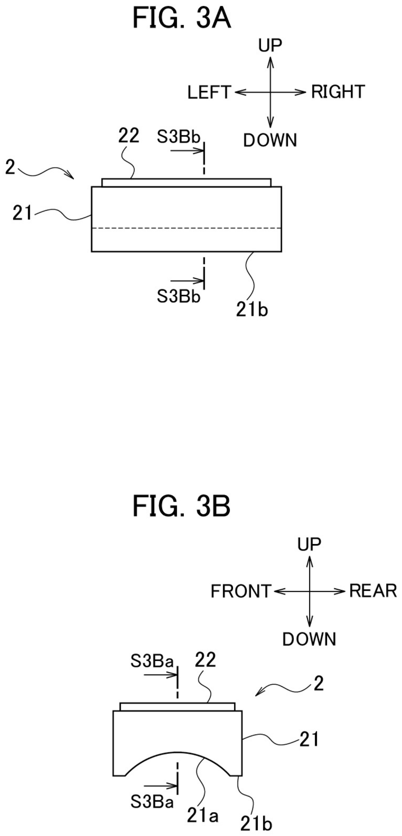

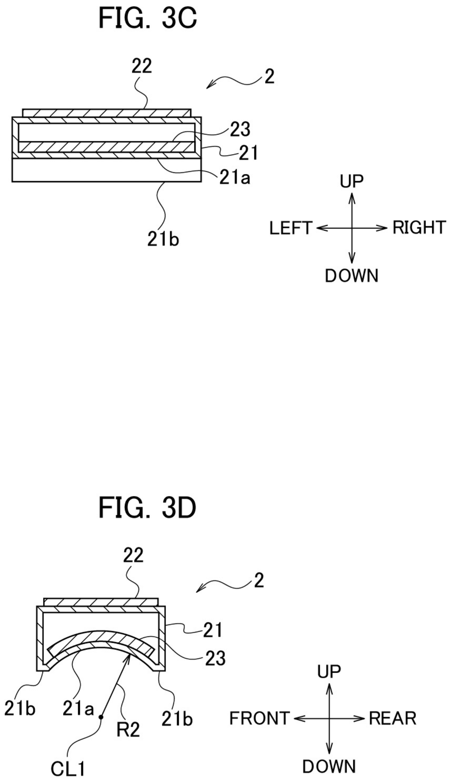

The configuration of the in-vehicle device 91 according to example 1 will be described with reference to FIGS. 1A to 3D. FIG. 1A is a front view illustrating the in-vehicle device 91 according to example 1 in the present embodiment, FIG. 1B is a top view of the in-vehicle device 91, and FIG. 1C is a right-side view of the in-vehicle device 91. FIG. 2A is a front view illustrating a main body part 1 of the in-vehicle device 91, FIG. 2B is a horizontal cross-sectional view of the main body part 1 at a position passing through an optical axis CLc, and FIG. 2C is a cross-sectional view taken along the line S2C-S2C of FIG. 2B. FIG. 3A is a front view of a pedestal part 2 of the in-vehicle device 91. FIG. 3B is a right-side view of the pedestal part 2 of the in-vehicle device 91. FIG. 3C is a cross-sectional view of the pedestal part 2 at a position taken along the line S3Ba-S3Ba of FIG. 3B. FIG. 3D is a cross-sectional view of the pedestal part 2 taken along the line S3Bb-S3Bb of FIG. 3A. For convenience of explanation, directions of up, down, left, and right are specified by the directions of the arrows illustrated in FIG. 1A. The front is the front side of the paper space of FIG. 1A, and the rear is the far side of the paper space of FIG. 1A.

The in-vehicle device 91 is mounted on a vehicle, such as an automobile. In this example, the in-vehicle device 91 is an in-vehicle camera, which is, for example, mounted on the inside of an automobile windshield, and captures an image of a scene in front of the vehicle through the windshield.

The in-vehicle device 91 includes the main body part 1 and the pedestal part 2. As illustrated in FIGS. 1A to 2A, the main body part 1 includes a housing 11 having an approximately cylindrical shape with an axial line CL1 extending in the lateral direction as a first direction, with the lateral direction as the longitudinal direction, and with a radius R1 as a first radius. The housing 11 is formed from resin and includes a projecting part 12 slightly projecting in an annular shape toward the front at the left. A receptacle 16 (see FIG. 2B) is exposed on a right-side surface 111 of the housing 11. A plug 81 of a connection cable 8 including the plug 81 and a cord 82, for connecting to an external device, is detachably mounted on the receptacle 16. As illustrated in FIG. 2C, an outer circumferential surface 11a of the housing 11 is formed as a cylindrical surface with the radius R1 centered on the axial line CL1.

As illustrated in FIG. 2B, the main body part 1 includes a camera unit 13, a signal processor 14, the receptacle 16, and a magnetic body 17 inside the housing 11. The camera unit 13 takes an axial line of the projecting part 12 as the optical axis CLc, and captures an image of a scene in front thereof through the projecting part 12. The signal processor 14 is connected to the camera unit 13 and outputs the image captured by the camera unit 13 as an image signal. The image signal output from the signal processor 14 is transmitted from the connection cable 8 through a lead 15 and the receptacle 16 to an external device.

The magnetic body 17 is a tubular member, as illustrated in FIGS. 2B and 2C, and is formed from a metal that can be magnetically attracted. In the present embodiment, the magnet means either a permanent magnet or an electromagnet. Although the material of the permanent magnet is a hard magnetic body, in the present embodiment, the magnetic body means a magnetically attractable metal (soft magnetic body). The magnetic body 17 is accommodated and fixed in the housing 11 such that its outer circumferential surface is along or close to the inner circumferential surface of the housing 11.

As illustrated in FIGS. 1A and 1B, and FIGS. 3A to 3D, the pedestal part 2 has a base body 21 formed in an approximately box-like shape which is rectangular in top view. The base body 21 is formed from resin. An adhesive member 22 is mounted on an upper wall 21c (see FIG. 1B) of the base body 21 for adhering the base body 21 to a mounting member on the vehicle side, such as a windshield.

As illustrated in FIGS. 3A to 3D, a contact wall surface 21a is formed on a lower wall 21b of the base body 21 by recessing the lower wall 21b upward as a recessed part. As illustrated in FIG. 3D, the contact wall surface 21a has a cylindrical surface having a radius R2 centered on the axial line CL1. The radius R2 is set equal to the radius R1 of the outer circumferential surface of the housing 11 of the main body part 1. That is, the contact wall surface 21a of the pedestal part 2 can be brought into close contact with the outer circumferential surface of the housing 11.

A magnet 23 is accommodated and fixed inside the base body 21. As illustrated in FIG. 3D, the magnet 23 is formed with its transverse cross-sectional shape being an arc shape, and is fixed along or close to the inner surface of the contact wall surface 21a.

In the in-vehicle device 91, the main body part 1 and the pedestal part 2 have the above-described configuration, and when the pedestal part 2 is brought close to the main body part 1, the magnetic body 17 of the main body part 1 is attracted to the pedestal part 2 due to the magnetic force from the magnet 23 of the pedestal part 2. Thus, the housing 11 of the main body part 1 can be magnetically attached to the base body 21 of the pedestal part 2. In this magnetic attachment, by making the direction of the axial line CL1 of the housing 11 coincide with a direction of the axial line of the contact wall surface 21a, which is the inner circumferential surface of the pedestal part 2, the pedestal part 2 and the main body part 1 can be integrated by bringing them into close contact with each other through surface contact.

The main body part 1 and the pedestal part 2 can be magnetically attached at any free position as long as the pedestal part 2 does not interfere with the projecting part 12. FIGS. 1A and 1B illustrate a state where the pedestal part 2 is magnetically attached such that its right end position matches the right end position of the main body part 1.

The magnetic force by which the main body part 1 is attached to the pedestal part 2 is such that while the pedestal part 2 is adhered to a vehicle windshield, and the main body part 1 is magnetically attached to the pedestal part 2, the main body part 1 does not fall off at least in the normal use state of the vehicle, and the main body part 1 can be removed from the pedestal part 2 by hand. The strength of the magnetic attachment force is optimized by selecting the material of the magnet 23 and setting the distance between the magnet 23 and the magnetic material. The latter includes setting items such as the fixed position of the magnetic body 17 in the housing 11, the fixed position of the magnet 23 in the base body 21, and the thickness of the housing 11 and the base body 21.

Since the in-vehicle device 91 has the above-described configuration, the pedestal part 2 can be fixed to an optional position where the pedestal part 2 does not interfere with the projecting part 12, on the outer circumferential surface of the main body part 1 through magnetic attachment. The main body part 1 can be removed from the pedestal part 2 against the magnetic attachment force by hand. Thus, after the pedestal part 2 is mounted on a mounting member, such as a windshield, the position where the main body part 1 is attached to and fixed to the pedestal part 2 can be freely changed independently in a direction along which the axial line CL1 extends (see arrow DR1 in FIG. 1A), and in a rotational direction about the axial line CL1 (see arrow DR2 in FIG. 1C).

FIG. 1C illustrates that the magnetically attached position of the main body part 1 relative to the pedestal part 2 can be optionally selected relatively within a range of 360 degrees about the axial line CL1, as indicated by the outline of the projecting part 12 being drawn using double dotted lines with a pitch of 90 degrees.

That is, with the in-vehicle device 91 it is possible to independently adjust both a vertical rotational adjustment in a direction where the optical axis CLc is directed to the mounting member, and a lateral movement adjustment, and thus usability is further improved.

After the pedestal part 2 is mounted on the mounting member, such as a windshield, in the in-vehicle device 91, it is possible to attach and detach the main body part 1 to and from the pedestal part 2 by hand. Thus, even when the pedestal part 2 is mounted on the mounting member, by removing the main body part 1 from the pedestal part 2, an image of a scene other than the front of the vehicle and a scene in the cabin can be freely captured using the in-vehicle device 91, and thus the usability is further improved.

### (Example 2)

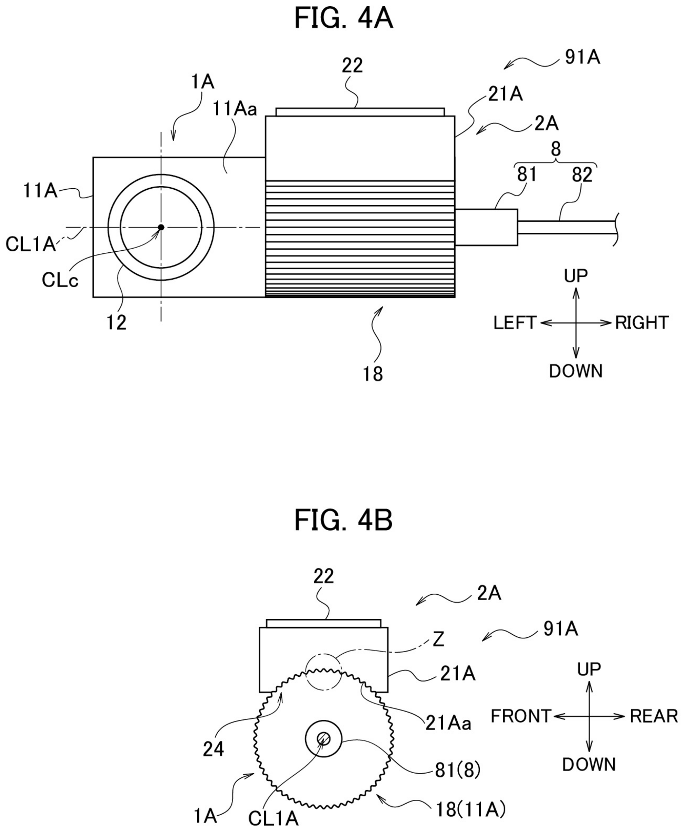

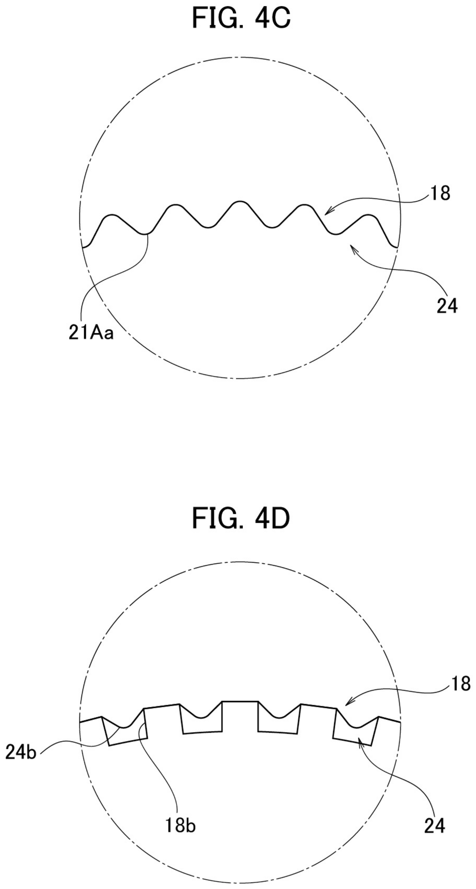

An in-vehicle device 91A according to example 2 includes a main body part 1A and a pedestal part 2A, and the shape of a contact part between the main body part 1A and the pedestal part 2A is different from that of the in-vehicle device 91 according to example 1. Regarding the in-vehicle device 91A, the difference will be described below mainly with reference to FIGS. 4A to 4C. FIG. 4A is a front view of the in-vehicle device 91A according to example 2 in the present embodiment. FIG. 4B is a right-side view of the in-vehicle device 91A. FIG. 4C is an enlarged view of a Z part in FIG. 4B.

A housing 11A of the main body part 1A differs from the housing 11 according to example 1 in that the housing 11A has an outer engaging part 18 in the circumferential direction of the outer circumferential surface thereof in a range where the projecting part 12 is not included, and the rest is the same such as including the magnetic body 17. As illustrated in FIGS. 4B and 4C, the outer engaging part 18 is formed on an outer circumferential part of the housing 11A, and is a part having a raised and recessed shape that is substantially sinusoidal in a transverse cross section and extending parallel to an axial line CL1A of the housing 11A. In this example, the outer engaging part 18 is formed on the entire circumference of approximately the right half of the housing 11A in the lateral direction. In other words, in the in-vehicle device 91A, an outer circumferential surface 11Aa of the housing 11A and an inner circumferential surface 21Aa of the base body 21A have multiple raised parts that extend in the first direction (lateral direction) and are formed at a predetermined angular pitch in the circumferential direction, on one side, and multiple recessed parts that extend in the first direction, are formed at the same angular pitch in the circumferential direction, and are engageable with the raised parts, on the other side. The main body part 1A and the pedestal part 2A can be integrated by engaging the raised parts and the recessed parts through magnetic attachment.

Meanwhile, the pedestal part 2A accommodating the magnet 23 has a contact wall surface 21Aa corresponding to the contact wall surface 21a of the pedestal part 2 on the base body 21A. The contact wall surface 21Aa has an inner engaging part 24 that engages in a raised and recessed manner with the outer engaging part 18 of the main body part 1A. Specifically, the inner engaging part 24 has an approximately sinusoidal shape with the same angular pitch and height (amplitude) as the outer engaging part 18 in a transverse cross section of the pedestal part 2A, and is formed in a raised and recessed shape extending parallel to the axial line CL1A in FIG. 4B. Thus, as illustrated in FIG. 4C, while the main body part 1A and the pedestal part 2A are magnetically attached, the outer engaging part 18 of the main body part 1A and the inner engaging part 24 of the pedestal part 2A engage in close contact through surface contact.

Thus, in the in-vehicle device 91A, the rotational position of the main body part 1A about the axial line CL1A relative to the pedestal part 2 is determined by the angular pitch of the raised and recessed parts (ridges and valleys) of the inner engaging part 24 and the outer engaging part 18. Consequently, when the main body part 1A is magnetically attached again after being removed from the pedestal part 2, reproducibility of the rotational position is high. It is suitable for a case where the main body part 1A is magnetically attached to the pedestal part 2A repeatedly.

Even when an unexpected external force is applied to the main body part 1A while the main body part 1A is magnetically attached to the pedestal part 2A, no displacement at least in the rotational direction occurs in the main body part 1. In this way, the in-vehicle device 91 is less likely to experience displacement of the image-capturing range due to an external force, and thus has high reliability as a camera.

The shapes of the outer engaging part 18 and the inner engaging part 24 need not be substantially sinusoidal as illustrated in FIG. 4C. For example, as illustrated in FIG. 4D, the outer engaging part 18 may be an approximately square wave shape with a recessed part 18b, and the inner engaging part 24 may have a gentle ridge part 24b that enters the recessed part 18b of the outer engaging part 18. The projecting height of the ridge part 24b is set sufficiently smaller than the depth of the recessed part 18b. In this case, since the ridge part 24b is formed as a gentle ridge with a small height, the external force required to rotate the main body part 1A magnetically attached to the pedestal part 2A in its magnetically attached state is small. Thus, when the in-vehicle device 91A is mounted on a vehicle or the like, rotational adjustment of the optical axis CLc in the vertical direction by hand becomes easier.

The raised and recessed relationship between the outer engaging part 18 and the inner engaging part 24 may have opposite shapes inside and outside. That is, the inner engaging part 24 may have an approximately square wave shape, and the outer engaging part 18 may have a ridge part that enters a recessed part having an approximately square wave shape of the inner engaging part 24.

### (Example 3)

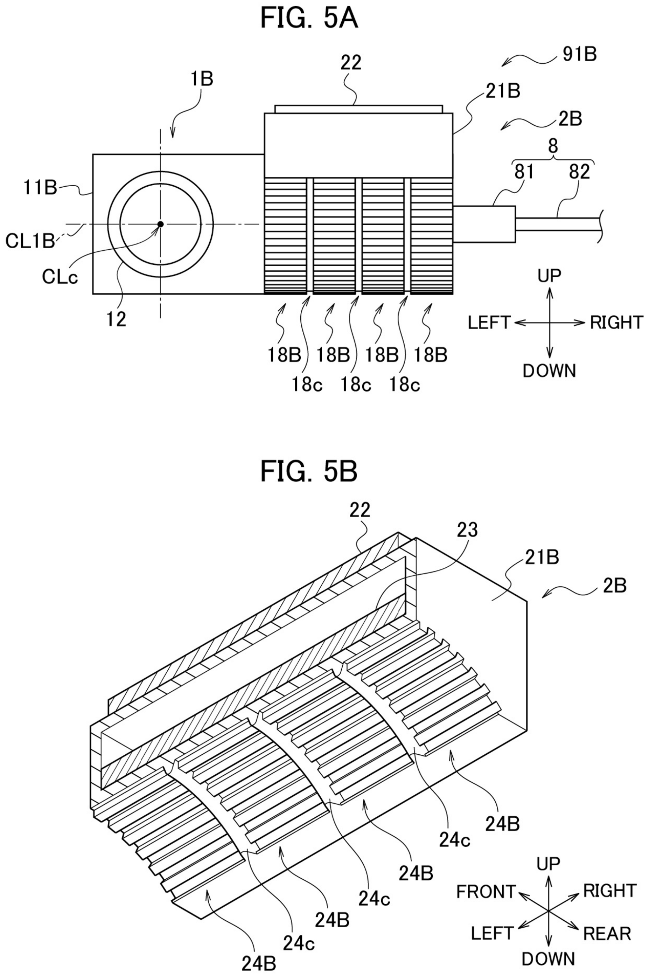

An in-vehicle device 91B according to example 3 includes a main body part 1B and a pedestal part 2B, and relative to the in-vehicle device 91A according to example 2, includes an outer engaging part 18B and an inner engaging part 24B which differ in shape from the outer engaging part 18 and the inner engaging part 24. Regarding the in-vehicle device 91B, the difference will be described below mainly with reference to FIGS. 5A and 5B. FIG. 5A is a front view of the in-vehicle device 91B according to example 3 in the present embodiment, and FIG. 5B is a perspective cross-sectional view of the pedestal part 2B of the in-vehicle device 91B.

As illustrated in FIGS. 5A and 5B, the outer engaging part 18B of the main body part 1B of the in-vehicle device 91B has a shape obtained by further adding circumferential grooves 18c formed in the circumferential direction to the shape of the outer engaging part 18 of the main body part 1A. In this example, there are multiple (three) circumferential grooves 18c formed at a predetermined pitch in the direction of an axial line CL1B of the housing 11B of the main body part 1B.

Correspondingly, in the pedestal part 2B of the in-vehicle device 91B, the inner engaging part 24B of the base body 21B is formed in a shape obtained by adding circumferential ribs 24c to be engaged with the circumferential grooves 18c to the shape of the inner engaging part 24 of the pedestal part 2A. In this example, the same number of circumferential ribs 24c (three) as the circumferential grooves 18c are formed at the same pitch as the circumferential grooves 18c.

Consequently, in the in-vehicle device 91B, the position of the main body part 1B in the direction of the axial line CL1B relative to the pedestal part 2B can be accurately determined for each pitch of the circumferential grooves 18c. In the case of having the three circumferential grooves 18c illustrated in FIGS. 5A and 5B, the pedestal part 2B can be positioned at a total of three positions in the lateral direction relative to the main body part 1B: the leftmost position illustrated in FIG. 5A, and two positions displaced to the right.

In this manner, in the in-vehicle device 91B, the position of the main body part 1B relative to the pedestal part 2B in the direction of the axial line CL1B (lateral direction) is determined to a predetermined position that is decided in advance. Thus, when the main body part 1B is magnetically attached again after being removed from the pedestal part 2B, reproducibility of the position in the direction of the axial line CL1B is high. It is suitable for a case where magnetic attachment is repeated.

### (Example 4)

Next, an in-vehicle device 91C according to example 4 will be described. In the above-described in-vehicle device 91, the main body part 1 is held against the pedestal part 2 through the magnetic attachment force, with the main body part 1 having a constant radius R1 (see FIG. 2C) in a cross section (transverse cross section) orthogonal to the axial line CL1 of the main body part 1, and outer and inner contact surfaces, which are circumferential surfaces having the radius R1, being in contact with each other.

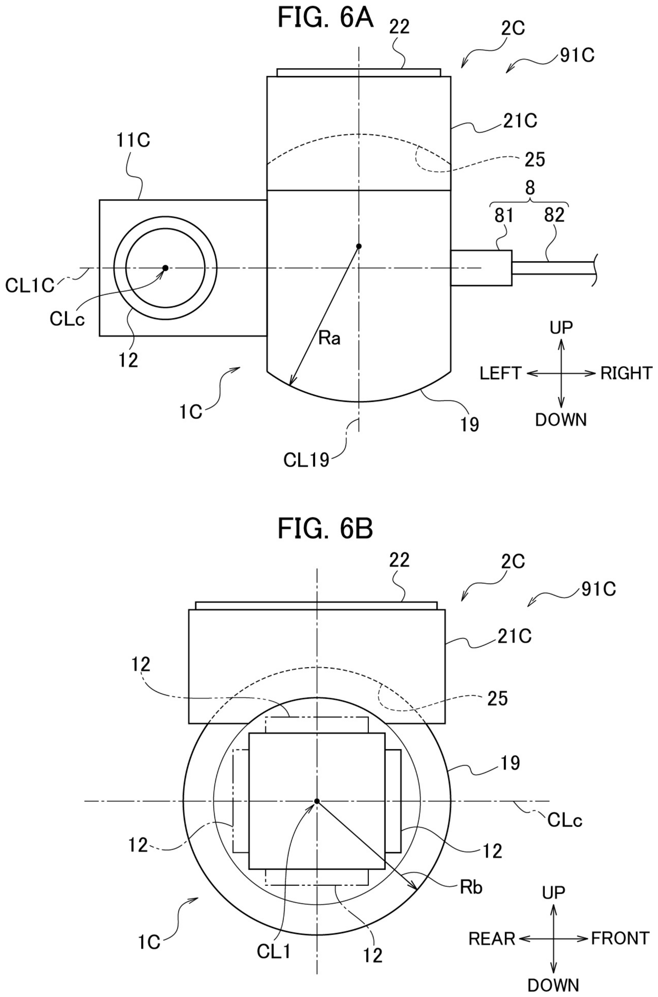

In contrast, in the in-vehicle device 91C according to example 4, an inner contact surface 25 of a base body part 21C in the pedestal part 2C, and an outer contact surface 19 of a casing 11C in a main body part 1C are formed with a radius Rb in the transverse cross section of the casing 11C illustrated in FIG. 6B, and are curved surfaces where the radius Rb varies in the direction of the axial line CL1C. The inner contact surface 25 and the outer contact surface 19 are brought into contact with each other through a magnetic attachment force between a magnet accommodated and fixed in the pedestal part 2C, and a magnetic body accommodated and fixed in the casing 11C. Hereinafter, a radius Ra is referred to as axial radius, and the radius Rb is referred to as circumferential radius Rb. When the circumferential radius Rb is assumed to be the first radius as corresponding to the radius R1 in example 1, the axial radius Ra becomes the second radius.

For example, the inner contact surface 25 and the outer contact surface 19 illustrated in FIG. 6B have a curved surface having a barrel shape, whose circumferential radius Rb is not constant in the direction of the axial line CL1C and varies with the axial radius Ra illustrated in FIG. 6A.

In the in-vehicle device 91C, the axial radius Ra is larger than the circumferential radius Rb in the relationship between the axial radius Ra and the circumferential radius Rb. The center of the circumferential radius Rb is positioned on the axial line CL1C, and the center of the axial radius Ra need not be positioned on the axial line CL1C as illustrated in FIG. 6A. With this structure, the main body part 1C can be magnetically attached to the pedestal part 2C in any rotational orientation about the axial line CL1C, and thus the mounting is possible through rotational adjustment of the direction of the optical axis CLc in the vertical direction. In the in-vehicle device 91C, the main body part 1C can be attached to and detached from the pedestal part 2C by hand against the magnetic attachment force, and thus scenes other than the front of the vehicle and scenes in the cabin can be freely captured using the removed main body part 1C, thereby further improving usability.

### (Example 5)

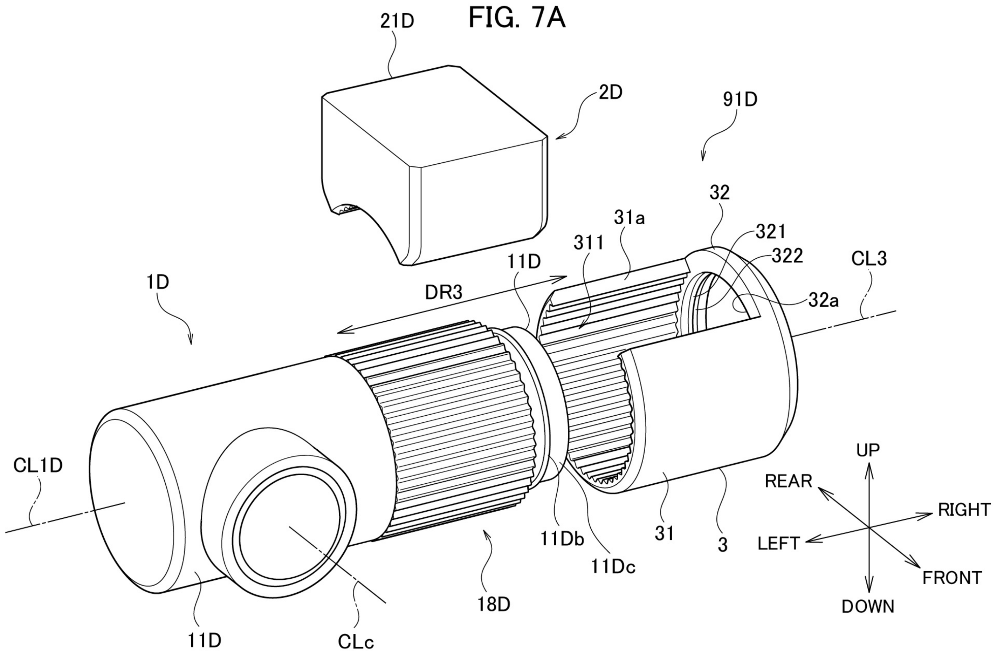

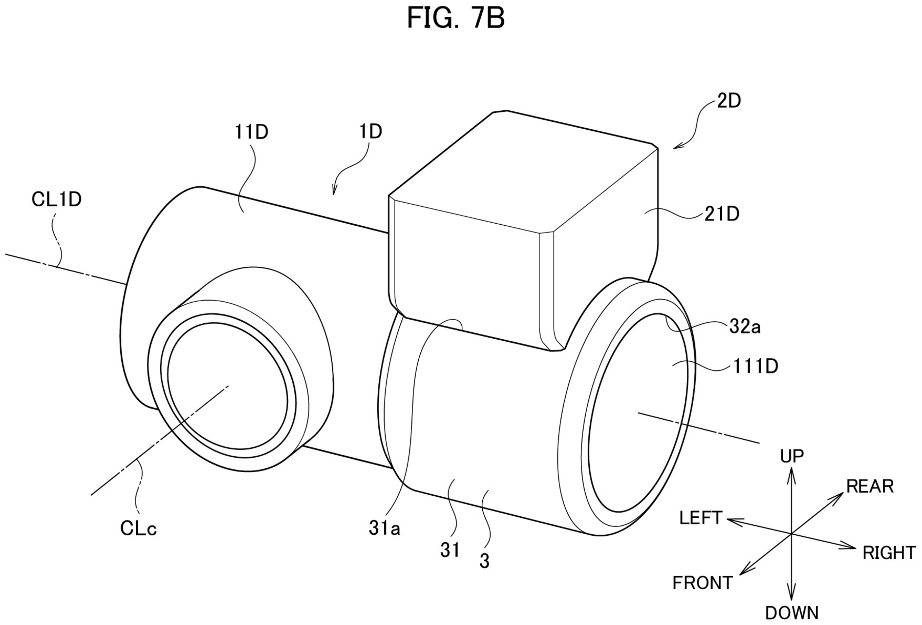

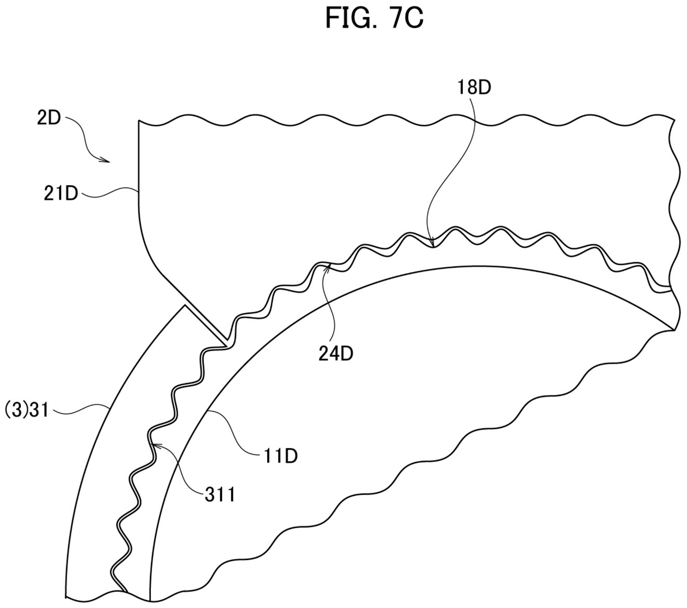

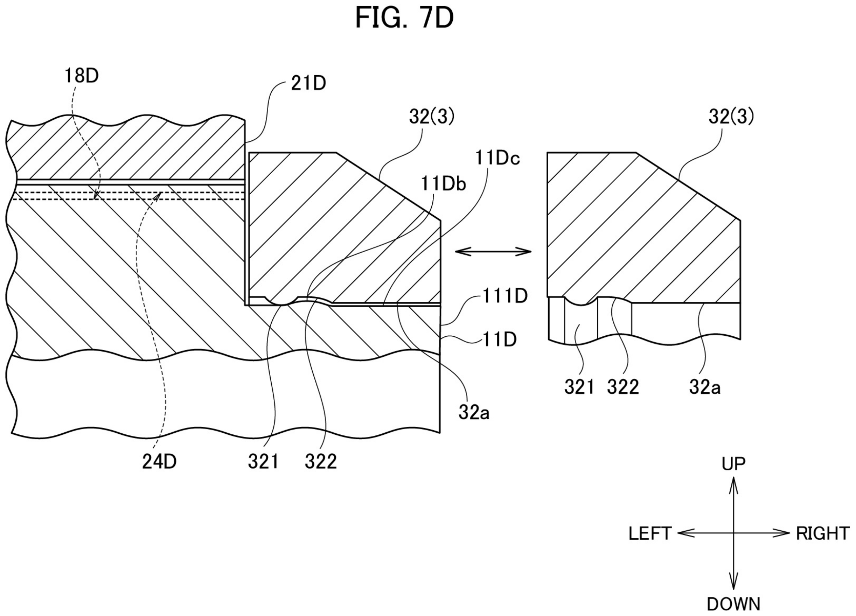

Next, an in-vehicle device 91D according to example 5 will be described with reference to FIGS. 7A to 7D. FIG. 7A is a perspective exploded view of the in-vehicle device 91D according to embodiment 5 in the present embodiment as viewed diagonally from the front upper left. FIG. 7B is a perspective view of the in-vehicle device 91D as viewed diagonally from the front upper left. FIG. 7C is a schematic transverse cross-sectional view illustrating a state of engagement between a pedestal part 2D and a stopper 3, and the housing 11D in the in-vehicle device 91D. FIG. 7D is a longitudinal cross-sectional view illustrating a state of engagement between the stopper 3 and the housing 11D in the in-vehicle device 91D.

The in-vehicle device 91D differs from the in-vehicle device 91A according to example 2 in such aspects as further including the stopper 3. As illustrated in FIG. 7A, the in-vehicle device 91D includes a main body part 1D, a pedestal part 2D, and the stopper 3. The pedestal part 2D is the same as the pedestal part 2A of the in-vehicle device 91A. The main body part 1D includes a housing 11D. The housing 11D differs from the housing 11A of the in-vehicle device 91A in that a right end position of an outer engaging part 18D having the same cross-sectional shape (raised and recessed rib shape) as the outer engaging part 18 is displaced to the left, thereby including a cylindrical end part 11Dc where the outer engaging part 18D is not formed at the right end. A circumferential rib 11Db projecting in the radial direction is formed on the outer circumferential surface of the cylindrical end part 11Dc.

The stopper 3 includes a base body 31 and a ring part 32. The base body 31 is a part whose transverse cross-sectional shape extends in a C-shape. The ring part 32 is a circumferentially closed annular part formed at the right end part of the base body 31. That is, the base body 31 includes a cutout part 31a cut in the direction of its own axil line CL3 from an end part opposite to the ring part 32. The opening width of the cutout part 31a is set such that the base body 21D of the pedestal part 2D can enter with substantially no gap.

In the entire axial range of the inner circumferential surface of the base body 31, an inner engaging part 311 is formed having a raised and recessed rib shape which is engageable with the outer engaging part 18D of the housing 11D. An opening part 32a which has a through hole centered on the axial line CL3 is formed in the ring part 32. A circumferential rib 321 and a circumferential groove 322 are formed on the inner surface of the opening part 32a. The circumferential rib 321 is formed over the entire circumference, projecting radially inward (with a reduced diameter). The circumferential groove 322 is formed adjacent to the circumferential rib 321 on the opposite side to the housing 11D, and is formed over the entire circumference, recessed radially (with an increased diameter).

The stopper 3 can be engaged with and removed from the housing 11D by engaging and separating the inner engaging part 311 to and from the outer engaging part 18D of the housing 11D at a position where the axial line CL3 coincides with the axial line CL1D of the main body part 1D (see arrow DR3 in FIG. 7A). When the pedestal part 2D is mounted on the housing 11D, the stopper 3 can be attached to and detached from the housing 11D by adjusting the circumferential position such that the cutout part 31a is aligned with the position of the pedestal part 2D.

FIG. 7B illustrates the external appearance when the stopper 3 is attached to the housing 11D, and FIG. 7C illustrates a state of engagement between the pedestal part 2D and the stopper 3, and the housing 11D. As illustrated in FIG. 7C, the height of the ridge of the inner engaging part 24D of the pedestal part 2D is sufficiently shallower than the depth of the recessed part of the outer engaging part 18D of the housing 11D, as in the example described with reference to FIG. 4D, and thus the circumferential position of a pedestal part 2D2 in the housing 11D can be changed and adjusted with less force. In contrast, the height of the ridge of the inner engaging part 311 of the stopper 3 is approximately the same as the depth of the recessed part of the outer engaging part 18D. Thus, it is practically difficult to manually change and adjust the circumferential position of the stopper 3 while the stopper 3 is attached to the housing 11D. Thus, once the circumferential position for attaching the pedestal part 2D relative to the housing 11D is determined (orientation of the optical axis CLc is determined), by attaching the stopper 3 as illustrated in FIG. 7B, it is possible to prevent the pedestal part 2D from being circumferentially displaced by an unexpected external force after attachment to the vehicle, i.e., to prevent the orientation of the optical axis CLc from changing.

When the stopper 3 is in a first position where it is pushed mostly into the housing 11D, as illustrated in FIG. 7D, the circumferential rib 321 of the stopper 3 rides over the circumferential rib 11Db formed on a cylindrical end part 11Dc of the housing 11D, and the circumferential rib 11Db is in a state of engagement with the circumferential groove 322 of the stopper 3. Thus, the stopper 3 is not removed from the housing 11D in the first position without intentionally applying a removing force.

### (Embodiment 6)

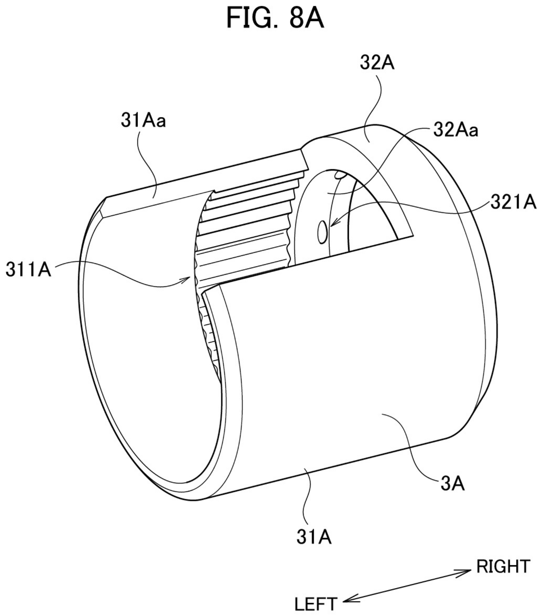

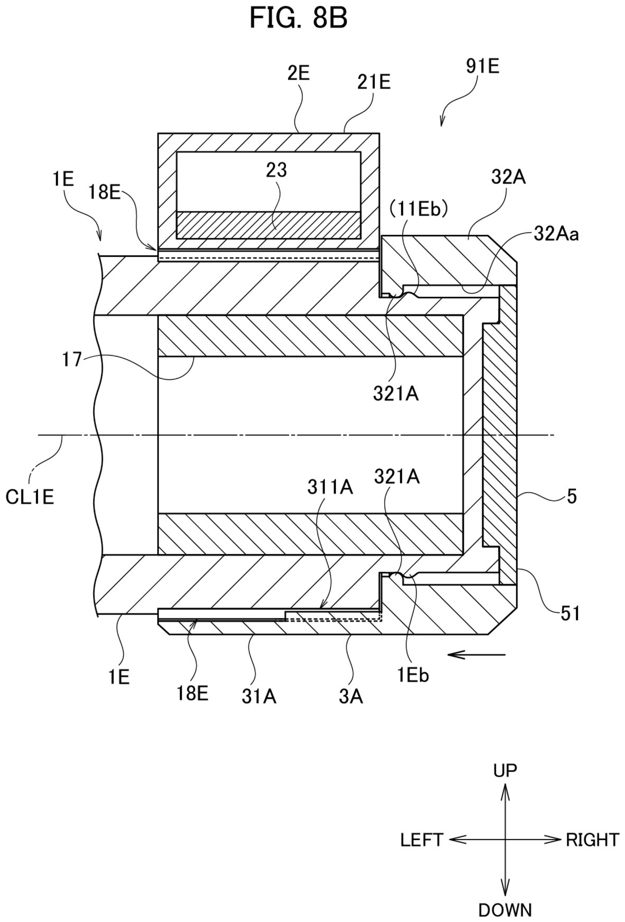

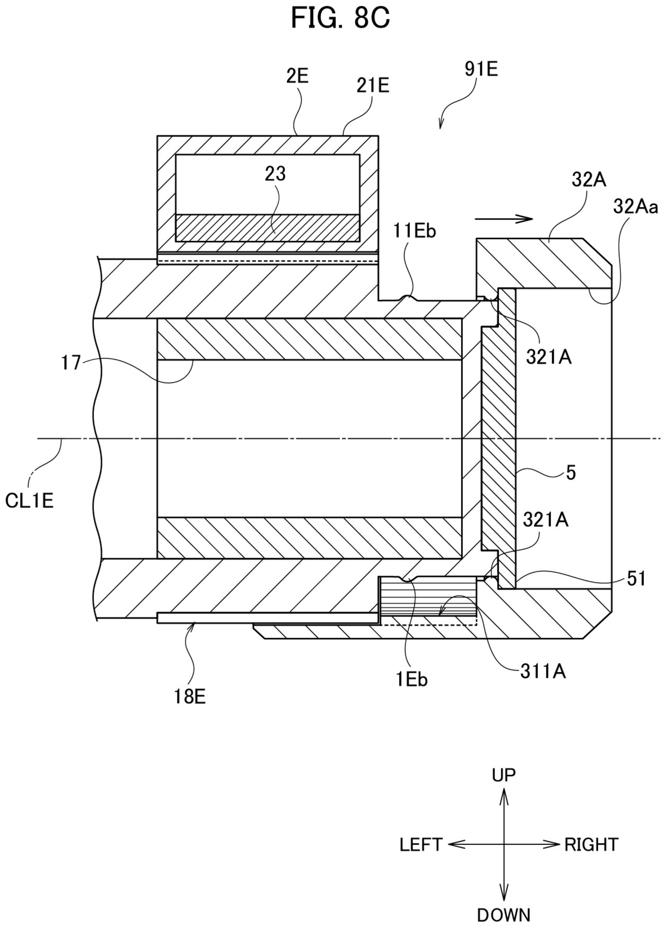

Next, an in-vehicle device 91E according to embodiment 6 will be described with reference to FIGS. 8A and 8B. FIG. 8A is a perspective view illustrating a stopper 3A provided in the in-vehicle device 91E according to embodiment 6 in the present embodiment. FIG. 8B is a longitudinal cross-sectional view illustrating an engagement state of the stopper 3A with a housing 11E when the stopper 3A is in a first position. FIG. 8C is a transverse cross-sectional view illustrating an engagement state of the stopper 3A with the housing 11E when the stopper 3A is in a second position.

As illustrated in FIG. 8B, the in-vehicle device 91E includes a main body part 1E, a pedestal part 2E, a stopper 3A, and a cap 5.

The main body part 1E differs from the in-vehicle device 91D in that, as illustrated in FIG. 8B, the cap 5 is attached to the right end of a housing 11E corresponding to the housing 11D, and the rest is the same. The cap 5 is detachably attached to the housing 11E, and includes a flange part 51 projecting radially outward when attached. The pedestal part 2E is the same as the pedestal part 2D.

The stopper 3A differs from the stopper 3 in that, as illustrated in FIGS. 8A and 8B, the inner engaging part 311 is formed only in part of the inner side of the base body 31A, and the circumferential ribs 321 are formed as multiple projections 321A intermittently formed. The stopper 3A is attached to the housing 11E from the right side while the cap 5 is not mounted, and then the cap 5 is mounted to the housing 11E. When the stopper 3A is mounted on the housing 11E, the stopper 3A can move in the lateral direction between a first position on the leftmost side (see FIG. 8B) and a second position on the rightmost side (see FIG. 8C).

In the first position, the projections 321A of the stopper 3A ride over a circumferential rib 11Eb of the housing 11E, and are positioned on the left side thereof. Thus, the stopper 3A maintains the first position unless a force to remove the stopper 3A to the right is intentionally applied such that the projections 321A ride over the circumferential rib 11Eb. Since the inner engaging part 311 is engaged with the outer engaging part 18E when the stopper 3A is in the first position, movement of the stopper 3A in the circumferential direction is restricted. That is, positional change of the pedestal part 2E in the circumferential direction is restricted.

When the projections 321A ride over the circumferential rib 11Eb and move further to the right by applying a force to remove the stopper 3A to the right, the stopper 3A is positioned in the second position where the projections 321A contact the flange part 51 of the cap 5. Thus, the movement of the stopper 3A to the right is restricted at the second position. In contrast, when the stopper 3A is positioned near the second position, the engagement between the inner engaging part 311 and the outer engaging part 18E is released. Thus, the stopper 3A can freely rotate about an axial line CL1E of the housing 11E near the second position. This enables selection of a circumferential position where the stopper 3A is to be engaged with the housing 11E, at the second position, and engagement with the housing 11E by moving the stopper 3A in the axial direction to the first position, at the determined circumferential position.

As described above, the attachment of the stopper 3 to the in-vehicle device 91D prevents the mounting position of the pedestal part 2D in the circumferential direction relative to the housing 11D from displacing. Consequently, the orientation of the optical axis CLc does not change unintentionally after the in-vehicle device 91D is mounted on a vehicle or the like, and mounting reliability is high. The attachment of the stopper 3A to the in-vehicle device 91E prevents the mounting position of the pedestal part 2E in the circumferential direction relative to the housing 11E from displacing, and the mounting position in the circumferential direction can be easily changed by simply moving the axial position of the stopper 3A in the axial direction from the usual first position to the second position. Consequently, mounting reliability of the in-vehicle device 91E is high, and convenience is improved.

The embodiment described in detail above is not limited to its configuration and may be implemented as a modification modified within the scope not departing from the gist of the present embodiment.

The shape of the magnetic body 17 accommodated and fixed in the main body parts 1, and 1A to 1E is not limited to a tubular shape. It may have a slit and a C-shaped transverse cross section. The magnetic body 17 may be configured as a group of multiple magnetic bodies where multiple elongated magnetic metals extending along the axial line CL1 are arranged at intervals in the circumferential direction.

The shape of the magnet 23 accommodated and fixed in the pedestal parts 2, and 2A to 2E is not limited to a circular arc shape in the transverse cross section. Multiple magnets 23 may be configured as a group of multiple magnets arranged in a distributed manner along the contact wall surface 21a.

Although the in-vehicle device 91 according to example 1 was described as having the magnetic body 17 on the main body part 1 side, and the magnet 23 on the pedestal part 2 side, the reverse may also be possible. That is, the magnet 23 may be provided on the main body part 1 side, and the magnetic body 17 may be provided on the pedestal part 2 side. The in-vehicle devices 91A to 91E according to examples 2 to 4 are the same.

In the in-vehicle device 91, the axial length of the pedestal part 2 is not limited to the above-described example. For example, the axial length of the pedestal part 2 may be the same as that of the main body part 1 as long as it does not interfere with the projecting part 12. This is the same for the in-vehicle devices 91A to 91E. In the main body part 1, the axial position of the camera unit 13 corresponding to the projecting part 12 is not limited to the aspect where the position is offset to the left side as described above. For example, the position may be offset to the right side, and the pedestal part 2 may be mounted on the left side of the main body part 1. This is the same for the in-vehicle devices 91A to 91E. That is, the axial position of the camera unit 13 in the main body part 1, the mounting position of the pedestal part 2 relative to the main body part 1, and the axial length thereof are not limited in any way, and are free as long as the projecting part 12 and the pedestal part 2 do not interfere. This is the same for the main body parts 1A to 1E, and the pedestal parts 2A to 2E.

In the in-vehicle device 91, the magnet 23 may be an electromagnet. In this case, when the pedestal part 2 is removed from the main body 1, power of the magnet 23, which is an electromagnet, is turned off to eliminate magnetic force, and when the pedestal part 2 is mounted on the main body 1, or when the mounting state is maintained, the power is turned on to generate magnetic force. This is the same for the in-vehicle devices 91A to 91E.

Although the magnetic body 17 has been described as a metal (soft magnetic body) that can be magnetically attracted, the magnetic body 17 may be a magnet (permanent magnet or electromagnet). In other words, the magnetic attractive force acting between the magnet 23 and the magnetic body 17 described above may be a magnetic attractive force generated between magnets. That is, the in-vehicle device 91 may have the magnetic body 17 replaced with a second magnet, and the pedestal part 2 may be magnetically attached to the main body part 1 due to the magnetic attractive force generated between the magnet 23, which is the first magnet, and the second magnet 17. This is the same for the in-vehicle devices 91A to 91E. In this way, by magnetically attaching the magnets to each other, stronger attachment is possible, and thus the magnet 23 and the magnetic body 17 as a magnet can be made smaller, thereby achieving space saving. Since the same attachment force can be obtained even when the thickness of the casing 11 and the base body 21 is increased, it is suitable when higher strength is required for the main body part 1 and the pedestal part 2.

The in-vehicle devices 91, and 91A to 91E are not limited to the above-described in-vehicle camera. For example, they may be drive recorders, communication devices, image display devices, various sensors, voice playback devices, information terminals, or the like. Thus, the in-vehicle devices 91, and 91A to 91E are devices where the main body parts 1, and 1A to 1C input or output electric signals.

### INDUSTRIAL APPLICABILITY

According to the present embodiment, it is possible to provide an in-vehicle device having good usability.

## Claims

1. An in-vehicle device comprising:
a main body part having a shape with a first direction as a longitudinal direction, and configured to input or output an electric signal;
a pedestal part configured to be mounted on a mounting member on a vehicle side;
a magnet provided on one of the main body part and the pedestal part; and
a magnetic body provided on another of the main body part and the pedestal part, wherein
the main body part has an outer circumferential surface of a curved surface having at least an arc shape with a first radius in a transverse cross section orthogonal to the first direction,
the pedestal part has an inner circumferential surface that is recessed inward as a curved surface having the first radius, and
the outer circumferential surface and the inner circumferential surface are magnetically attached due to a magnetic force of the magnet, which integrates the main body part and the pedestal part.

2. The in-vehicle device according to claim 1, wherein the first radius varies along the first direction, and the outer circumferential surface and the inner circumferential surface are curved surfaces having a second radius larger than the first radius when viewed from a direction orthogonal to the first direction.

3. The in-vehicle device according to claim 1, wherein the first radius is constant along the first direction.

4. The in-vehicle device according to claim 1, wherein one of the outer circumferential surface and the inner circumferential surface includes a plurality of raised parts extending in the first direction and formed at a predetermined angular pitch in a circumferential direction,
another of the outer circumferential surface and the inner circumferential surface includes a plurality of recessed parts extending in the first direction and formed at the angular pitch in the circumferential direction, and
the main body part and the pedestal part are integrable by engaging the raised parts with the recessed parts.

5. The in-vehicle device according to claim 4, wherein one of the outer circumferential surface and the inner circumferential surface has a circumferential groove,
another of the outer circumferential surface and the inner circumferential surface has a circumferential rib engageable with the circumferential groove, and
the main body part and the pedestal part are integrable by engaging the raised parts with the recessed parts, and engaging the circumferential rib with the circumferential groove.
